(19) Europäisches Patentamt
European Patent Office
Office européen des brevets

(11) **EP 3 931 798 B1**

(12) **EUROPÄISCHE PATENTSCHRIFT**

(45) Veröffentlichungstag und Bekanntmachung des Hinweises auf die Patenterteilung:
**19.04.2023 Patentblatt 2023/16**

(21) Anmeldenummer: **20707643.1**

(22) Anmeldetag: **28.02.2020**

(51) Internationale Patentklassifikation (IPC):
***G06T 7/207*** *(2017.01)*      ***G06T 7/246*** *(2017.01)*
***G06T 7/269*** *(2017.01)*

(52) Gemeinsame Patentklassifikation (CPC):
**G06T 7/248; G06T 7/207; G06T 7/269**

(86) Internationale Anmeldenummer:
**PCT/EP2020/055352**

(87) Internationale Veröffentlichungsnummer:
**WO 2020/178198 (10.09.2020 Gazette 2020/37)**

(54) **SCHÄTZUNG DER BEWEGUNG EINER BILDPOSITION**

ESTIMATING THE MOVEMENT OF AN IMAGE POSITION

ESTIMATION DU DÉPLACEMENT D'UNE POSITION D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2019 DE 102019105293**

(43) Veröffentlichungstag der Anmeldung:
**05.01.2022 Patentblatt 2022/01**

(73) Patentinhaber: **Hochschule Rheinmain University of Applied Sciences Wiesbaden Rüsselsheim 65197 Wiesbaden (DE)**

(72) Erfinder:
• **NARROSCHKE, Matthias 64850 Schaafheim (DE)**
• **KAH, Andreas 65451 Kelsterbach (DE)**

(74) Vertreter: **Richardt Patentanwälte PartG mbB Wilhelmstraße 7 65185 Wiesbaden (DE)**

(56) Entgegenhaltungen:
**DE-A1-102017 104 957    DE-A1-102018 108 324**

• **CHRISTOPHER E SMITH ET AL: "Visual Tracking for Intelligent Vehicle-Highway Systems", IEEE TRANSACTIONS ON VEHICULAR TECHNOLOGY, IEEE SERVICE CENTER, PISCATAWAY, NJ, US, Bd. 45, Nr. 4, November 1996 (1996-11), XP011063528, ISSN: 0018-9545**

**Beschreibung**

Die Erfindung betrifft die computerimplementierte Verarbeitung digitaler Bilddaten, insbesondere die automatische Verfolgung eines Bildpunkts von einem ersten Bild zu einem zweiten Bild.

Objektverfolgung ist ein wichtiges Werkzeug, das in vielen Bildverarbeitungsanwendungen verwendet wird. Ein Problem, das bei der Verfolgung der Bewegung eines Objekts in aufeinanderfolgenden Bildern häufig auftritt, ist die Unterscheidung der Bewegung eines Objekts von einem Hintergrund, der möglicherweise selbst veränderlich ist. Ein verwandtes Problem ist das Erkennen eines in einem Bild zu erkennenden Bildmerkmals in einem weiteren Bild, das ungefähr zum selben Zeitpunkt aus einer anderen Perspektive aufgenommen wurde. Beispiele für ein Szenario sind das Erkennen von Bewegungen menschlicher Merkmale wie Kopfbewegungen oder Gesichtszüge und das Erkennen von Fußgängern, Fahrzeugen und Fahrzeugumgebungen im Straßenverkehr. Bei der Aufnahme einer Bildsequenz wird deutlich, dass sich z.B. auch die Hintergrundlandschaft und Vordergrundobjekte im Bild bewegen (z.B. Bäume, Fahrzeuge und Menschen). Bewegungen eines Vordergrundobjekts relativ zum Bildmerkmal können sogar das im ersten Bild sichtbare Bildmerkmal im zweiten Bild verdecken. Die genannten Effekte reduzieren den Korrelationsgrad zwischen relativen und absoluten Positionsänderungen und erschweren somit die Verfolgung des Objekts.

Eine Aufgabe der Erfindung ist daher, ein verbessertes computerimplementiertes Verfahren zur Schätzung der Bewegung einer Bildposition eines Bildmerkmals zwischen einem ersten Bild und einem zweiten Bild bereitzustellen. Die der Erfindung zugrunde liegenden Aufgaben werden durch die Merkmale der unabhängigen Patentansprüche gelöst. Ausführungsformen sind in den abhängigen Patentansprüchen angegeben.

Die DE 10 2017 104957 A1 betrifft ein Verfahren zum Bestimmen einer Bewegung von zueinander korrespondierenden Bildpunkten in zumindest zwei Bildern einer von einer Kamera eines Kraftfahrzeugs aus einem Umgebungsbereich des Kraftfahrzeugs erfassten Bildsequenz, wobei an zumindest einem Bildpunkt in einem ersten Bild der Bildsequenz ein Strukturtensor bestimmt wird, durch welchen zumindest eine photometrische Kenngröße in einer Nachbarschaft des Bildpunktes beschrieben wird, ein optischer Fluss der Bildsequenz anhand des Strukturtensors bestimmt wird, die Bewegung der zueinander korrespondierenden Bildpunkte in dem ersten Bild und einem zweiten Bild der Bildsequenz anhand des optischen Flusses bestimmt wird, und wobei nichtlineare Bildverzerrungen eines Bildinhaltes in dem ersten Bild im Vergleich zum zweiten Bild und/oder Bewegungsgrenzen in dem ersten und zweiten Bild berücksichtigt werden, indem zumindest zwei partielle Strukturtensoren für den zumindest einen Bildpunkt bestimmt werden und der Strukturtensor als ein adaptiver Strukturtensor anhand der zumindest zwei partiellen Strukturtensoren bestimmt wird. Die Erfindung betrifft außerdem eine Auswerteeinrichtung, ein Fahrerassistenzsystem sowie ein Kraftfahrzeug.

Zur Lösung der Aufgabe ist ein wie im Anspruch 1 definiertes computerimplementiertes Verfahren zur Schätzung der Bewegung einer Bildposition eines Bildmerkmals zwischen einem ersten Bild und einem zweiten Bild vorgesehen.

Das Verfahren setzt Bildinformationen eines ersten Bildes in Beziehung mit Bildinformationen eines zweiten Bildes. Insbesondere liegt ein aus den Bildinformationen des ersten Bildes bestimmtes Bildmerkmal vor, das durch eine Bildposition charakterisiert ist. Es wird angenommen, dass es sich bei beiden Bildern um Digitalbilder handelt und dass die Bildposition in Koordinaten $(x_0, y_0)$ eines Bildpunkts (Pixels) des ersten Bildes gegeben ist. Diese Koordinaten müssen jedoch nicht ganzzahlig sein. Sie können auch kontinuierlich sein. Die Bestimmung des Bildinhaltes an einer nicht ganzzahligen Bildposition kann beispielsweise mit einer Interpolation erfolgen. Gemäß Ausführungsformen weisen das erste und das zweite Bild identische Abmessungen auf, d.h. sie besitzen eine identische Auflösung und erstrecken sich in jeder der beiden Bilddimensionen über eine jeweils identische Anzahl von Pixeln. Dies könnte beispielsweise der Fall sein, wenn beide Bilder von derselben Bilderfassungsvorrichtung (z.B. Kamera, Scanner) oder zwei verschiedenen Bilderfassungsvorrichtungen mit identisch dimensionierten Bildsensoren oder zwei Bilderfassungsvorrichtungen mit verschiedenen Sensoren, aber hinsichtlich der Ausgabeauflösung identisch konfigurierten Treibern aufgenommen wurden. Die Erfindung ist jedoch nicht auf identische Auflösungen beschränkt. Die beiden Bilder können auch unterschiedliche Auflösungen aufweisen, wenn beispielsweise die Bildkoordinatensysteme beider Bilder zueinander registriert sind. Die Bildfenster im ersten Bild können zum Beispiel Bounding-Boxen sein, die jeweils ein Bildmerkmal eines Objekts aufweisen.

Ein Bildmerkmal wird hierin als ein zusammenhängender Bildbereich verstanden, der wenigstens den Bildpunkt an der Bildposition $(x_0, y_0)$ umfasst. Umfasst ein Bildmerkmal mehr als nur den Bildpunkt an der Bildposition $(x_0, y_0)$, so gibt die Bildposition $(x_0, y_0)$ einen Referenzpunkt des Bildmerkmals an. Die Bildposition und ggf. weitere Eigenschaften des Bildmerkmals werden beispielsweise als Ausgabe ("markanter Punkt") eines Erkennungsalgorithmus wie beispielsweise dem Harris Corner Detector oder einem anderen Interest-Operator empfangen. Dies ist jedoch keine allgemeine Voraussetzung; ein Bildmerkmal kann vielmehr ein beliebiger Bildpunkt sein, der beispielsweise von einem Algorithmus aktuell ausgewählt ist, der z.B. sequenziell Bildpunkte (etwa jeden Bildpunkt des jeweiligen Bildes) auswählt, oder auch ein zufällig oder willkürlich (beispielsweise durch einen Benutzer) ausgewählter Bildpunkt, den ein Erkennungsalgorithmus nicht notwendigerweise als markanten Punkt identifizieren würde.

Die Erfindung geht davon aus, dass die in der Bildinformation des ersten Bildes wiedergegebene Struktur (z.B. ein fotografisch erfasstes reales Objekt oder eine virtuelle Modellstruktur) einen Überschneidungsbereich mit der in der Bildinformation des zweiten Bildes wiedergegebenen Struktur aufweist, innerhalb dessen sich die durch das Bildmerkmal wiedergegebene Struktur befindet. Dies schließt nicht aus, dass die genannte Struktur im zweiten Bild z.B. aufgrund von Bewegung und / oder einem Unterschied in der Perspektive verdeckt sein kann. Folglich kann das Bildmerkmal im zweiten Bild vollständig oder teilweise fehlen. Aufgrund einer geänderten Perspektive kann auch eine neue Struktur aufgedeckt werden, beispielsweise an Objekträndern.

Ein Bildfenster, oder kurz Fenster, ist hierin definiert als eine logische Auswahl oder Abgrenzung eines Bildbereichs. Auf die innerhalb eines Bildfensters liegenden Bilddaten können Bildverarbeitungsalgorithmen unabhängig von außerhalb des Bildfensters liegenden Bildbereichen angewendet werden. Dabei ist zu beachten, dass unmittelbar an ein Fenster angrenzende Pixel von manchen Algorithmen in die Berechnung einbezogen werden können, wie dies z.B. bei der Berechnung von Nächst-Nachbar-Differenzen oder -Mittelwerten bekannt ist. Ein Bildfenster kann eine beliebige geometrische Form aufweisen. Vorzugsweise weist jeder Bildpunkt innerhalb des Fensters wenigstens einen benachbarten Bildpunkt innerhalb des Fensters auf. Vorzugsweise ist jedes Bildfenster von rechteckiger Form, noch bevorzugter quadratisch. Die Bildfenster im ersten Bild können zum Beispiel unterschiedliche Bounding-Boxen sein, wobei jede Bounding-Box das gleiche Bildmerkmal eines Objekts enthält.

Im Schritt der Bestimmung des Satzes von Bildfenstern werden Position und Größe jedes Bildfensters im ersten Bild so gewählt, dass die Bildposition $(x_0, y_0)$ innerhalb des Bildfensters liegt. In Ausführungsformen der Erfindung hat das Bildmerkmal eine Ausdehnung von $1 \times 1$ pel², wobei ein pel dem Abstand zwischen zwei Bildpunkten entspricht, und jedes Bildfenster ist quadratisch mit einer Ausdehnung von $(2N + 1)$ pel in jeder Bilddimension, wobei $N$ eine natürliche Zahl von identischem Wert für jedes Fenster ist. Eine zweckmäßige Wahl des Wertes $N$ könnte einer Längenskala entsprechen, für die eine Erkennung des Bildmerkmals im zweiten Bild erwartet wird und / oder die in Kombination mit den weiteren Fenstern des Satzes eine möglichst lückenlose Abdeckung einer größeren Umgebung der Bildposition erlaubt. Gemäß Ausführungsformen hat $N$ einen Wert von mindestens 3.

Der Schritt der Identifikation zumindest eines Teils des Satzes der Bildfenster in dem zweiten Bild weist wenigstens ein Platzieren eines Fensters im zweiten Bild auf, wobei das im zweiten Bild platzierte Bildfenster einem der im ersten Bild platzierten Bildfenster des Satzes entspricht. Der Schritt der Identifikation kann weitere aus dem Stand der Technik bekannte oder hierin offenbarte Aktionen implementieren, beispielsweise einer Suche eines Bildbereichs im zweiten Bild, dessen Bildinhalt eine hohe Übereinstimmung mit dem von dem Satz von Bildfenstern im ersten Bild überdeckten Bildbereich aufweist und somit für die Platzierung der Fenster im zweiten Bild am besten geeignet ist; einer Identifikation eines dem Bildmerkmal mit hoher Übereinstimmung entsprechenden Bildmerkmals im zweiten Bild; oder einer Bestimmung eines Unterschieds zwischen den Bildinhalten von einander entsprechenden Bildbereichen, z.B. durch Berechnung der Signaldifferenz je Bildpunkt oder des optischen Flusses. Des Weiteren kann zum Beispiel die Schritt der Identifikation des zumindest einen Teils des Satzes der Bildfenster in dem zweiten Bild unter Verwendung einer optischen Fluss-Bestimmungsmethode erfolgen. Für jedes Bildfenster im ersten Bild des Teil des Satzes der Bildfenster wird ein entsprechendes zugehöriges Bildfenster im zweiten Bild unter Verwendung der optischen Fluss-Bestimmungsmethode ermittelt.

Als Ergebnis des Identifikationsschritts sind im zweiten Bild ein oder mehrere Fenster des Satzes definiert und jeweils einem der Fenster im ersten Bild zugeordnet. Die Identifikation kann unvollständig verlaufen, d.h. möglicherweise lässt sich nicht jedem im ersten Bild platzierten Fenster ein Fenster im zweiten Bild zuordnen. Dies könnte beispielsweise der Fall sein, wenn ein Vergleich zwischen dem ersten und dem zweiten Bild durchgeführt wird und eine schlechte Übereinstimmung ergibt, etwa wenn im zweiten Bild die Struktur des Bildmerkmals und / oder von dessen Umgebung im Vergleich zum ersten Bild teilweise oder vollständig verdeckt, verfälscht oder verloren ist.

Für jedes der so identifizierten Fenster wird daraufhin eine Güte der Zuordnung des jeweiligen Bildfensters im ersten Bild zum entsprechenden Bildfenster im zweiten Bild bestimmt. Als Maß für die Güte kann grundsätzlich jedes Maß verwendet werden, das einen Unterschied zwischen den Bildinhalten eines jeweils zugeordneten Fensterpaares und / oder zwischen den einander entsprechenden Bildmerkmalen im ersten und zweiten Bild quantifiziert. Beispiele für Gütemaße werden im weiteren Verlauf der vorliegenden Offenbarung näher beschrieben. Die Güte kann auch im selben Arbeitsschritt mit der Identifikation eines Fensters erfolgen, sodass ein Über- oder Unterschreiten eines vorgegebenen Schwellenwertes durch die Güte als Kriterium für die Annahme bzw. Ablehnung einer versuchten Zuordnung dienen könnte.

Anhand der jeweiligen Güte wird eines der Bildfenster im zweiten Bild zur Fortsetzung des Verfahrens ausgewählt. Vorzugsweise wird dasjenige der Bildfenster ausgewählt, für das das Gütemaß im Vergleich zu den übrigen Bildfenstern den höchsten Wert hat.

Schließlich wird unter Verwendung des ausgewählten Bildfensters die Bewegung der Bildposition des Bildmerkmals geschätzt. Dies kann beispielsweise durch Berechnung des optischen Flusses zwischen dem ersten und dem zweiten Bild innerhalb des ausgewählten Bildfensters oder mit einem geeigneten anderen aus dem Stand der Technik bekannten Ansatz erfolgen. Die Schätzung könnte ermöglichen, Veränderungen des Bildinhalts zwischen dem ausgewählten Fenster und dem diesem zugeordneten Fenster im ersten Bild zu erfassen. Dies könnte insbesondere eine präzise Nachverfolgung der Bewegung des Bildmerkmals ermöglichen.

Zu Vorteilen des beschriebenen Verfahrens könnte zählen, dass eine Nachverfolgung eines Bildmerkmals auch dann ermöglicht werden könnte, falls das Bildmerkmal im zweiten Bild überdeckt ist. Im Fall einer vollständigen Überdeckung hätte die Güte der Zuordnung den Wert null (oder einen anderen Wert, der eine niedrige Übereinstimmung anzeigt) und das Bildfenster ist wahrscheinlich an einem zur Nachverfolgung ungünstigen Ort platziert. Durch Optimierung anhand des Gütemaßes könnte das Bildfenster jedoch so platziert werden, dass keine bzw. eine möglichst kleine Überdeckung stattfindet und eine sichere Nachverfolgung des Bildmerkmals ermöglicht werden könnte. Aufgrund einer geeigneten Wahl von Größe, Position und Form des Bildfensters könnte gewährleistet werden, dass immer zumindest ein Teil des Fensters selbst bei Überdeckung im zweiten Bild sichtbar bleibt.

Zudem könnte es überflüssig sein, zum Schätzen der Bewegung beispielsweise den optischen Fluss nicht aus den gesamten Bildflächen der beiden Bilder zu bestimmen, sondern nur innerhalb des ausgewählten Fensters relativ zu dessen zugeordnetem Fenster im ersten Bild. Auf diese Weise könnten zur Wiedererkennung verwendete Computing-Ressourcen effizienter genutzt werden. Auch der Schritt der Identifikation kann, insbesondere bei Bildern mit identischer Auflösung, durch einfaches Platzieren einer Kopie des Satzes von Fenstern an den jeweils identischen Koordinaten des zweiten Bildes erfolgen, sodass ein minimaler Einsatz von Computing-Ressourcen für diesen Schritt erforderlich sein könnte. Aufgrund der Effizienz könnte das erfindungsgemäße Verfahren besonders gut für großformatige Bilder (z.B. mit einer Auflösung von mindestens 10.000 Pixeln in jeder Bilddimension) geeignet sein.

Die Funktionsweise des Verfahrens wird aufgrund des folgenden Beispiels illustriert. Es sei eine Aufgabe, eine Bewegung eines Flugzeuges auf einem Flugfeld unter Einsatz von Videoüberwachung nachzuverfolgen. Im Schritt der Bestimmung eines Satzes von Bildfenstern im ersten Bild wird ein Satz von unterschiedlichen Bounding-Boxen in einem Frame eines Videosignals einer Videoüberwachungskamera (d.h. im ersten Bild) bestimmt. Jede Bounding-Box enthält ein charakteristisches Merkmal einer Abbildung des Flugzeugs, wie z.B. eine Abbildung eines bestimmten Flugzeugfensters einer Pilotenkabine des Flugzeugs. Die Bounding-Boxen enthalten weiter Abbildungen von unterschiedlichen Fragmenten des Flugzeuges wie angrenzende Fragmente eines Flugkörpers und/oder einer oder mehrerer anderen Flugzeugfenster der Pilotenkabine.

Ein zweites Bild, das im Schritt der Identifikation zumindest eines Teils des Satzes der Bildfenster in dem zweiten Bild verwendet wird, stammt von einem anderen Frame des Videosignals, das eine andere Ansicht der Pilotenkabine zeigt. Die Platzierungen der Ansichten der Kabine sind in dem ersten und in dem zweiten Bild unterschiedlich. Außerdem sind die Abbildungen des bestimmten Flugzeugfensters und der angrenzenden Fragmente des Flugzeugs in diesen Bildern ebenfalls unterschiedlich. Diese Abbildungsunterschiede werden z.B. durch eine stärkere Sonnenbeleuchtung im zweiten Bild verursacht. Als Folge davon glänzen manche Fragmente der Kabine im zweiten Bild und ein Fenstervorhang hat nun das Aussehen des bestimmten Flugzeugfensters verändert. Dies bedeutet, dass die Abbildungen des bestimmten Flugzeugfensters und Abbildungen von diverser der angrenzenden Fragmente im ersten und im zweiten Bild unterschiedlich sind. Durch die obig beschriebene erfindungsgemäße Verwendung des Satzes der Bildfenster (Bounding-Boxen) im ersten Bild kann nun sichergestellt werden, dass zumindest eine Bounding-Box günstig genug im ersten Bild platziert ist, dass sie im zweiten Bild identifizierbar ist, da sie - im obigen Beispiel bleibend - eine Abbildung von Kabinenfragmenten aufweist, die im zweiten Bild nicht glänzen.

Im weiteren Verfahren wird eine Güte einer Zuordnung des jeweiligen Bildfensters (Bounding-Box) im ersten Bild zum jeweiligen Bildfenster (Bounding-Box) im zweiten Bild bewertet und eines der Bildfenster (Bounding-Boxen) anhand der Bewertung wird ausgewählt. Dieser Schritt dient zur Auswahl der Bounding-Box im zweiten Bild, deren Inhalt die beste Übereinstimmung mit der entsprechenden Bounding-Box im ersten Bild aufweist. In dem oben erwähnten Beispiel weist die ausgewählte Bounding-Box im zweiten Bild eine Abbildung von einem oder mehreren nicht glänzenden Kabinenfragmenten auf, die die beste Güte für die ausgewählte Bounding-Box liefert. Im letzten Schritt wird die Bewegung der Bildposition des Bildmerkmals (des bestimmten Flugzeugfensters) unter Verwendung des ausgewählten Bildfensters (der ausgewählten Bounding-Box) geschätzt. Die Schätzung der Bewegung des Flugzeugfensters genügt, um die Bewegung des gesamten Flugzeugs zu schätzen.

Gemäß Ausführungsformen weisen alle Bildfenster des Satzes eine identische geometrische Form sowie identische Abmessungen auf. Gemäß Ausführungsformen werden die Bildfenster gemäß einer vorbestimmten Anordnung um das Bildmerkmal platziert. Gemäß Ausführungsformen werden die Bildfenster gemäß einer zufälligen Anordnung um das Bildmerkmal platziert. Gemäß Ausführungsformen weist jedes Bildfenster des Satzes einen Mittelpunkt auf und der Mittelpunkt jedes Bildfensters des Satzes liegt innerhalb eines vorgegebenen Radius oder eines vorgegebenen Suchfensters um die Bildposition. Gemäß Ausführungsformen liegt jedes Bildfenster des Satzes innerhalb eines vorgegebenen Radius oder eines vorgegebenen Suchfensters um die Bildposition. Gemäß Ausführungsformen wird wenigstens eines der Fenster im zweiten Bild an derselben Stelle platziert wie das entsprechende Fenster im ersten. Gemäß Ausführungsformen haben beide Bilder identische Abmessungen und weist die Identifikation für jedes Fenster ein Platzieren einer Kopie des Fensters im zweiten Bild an den Koordinaten des Fensters im ersten Bild auf.

Gemäß Ausführungsformen umgibt der Satz der Bildfenster die Bildposition im ersten Bild punktsymmetrisch zur Bildposition. Auf diese Weise könnte eine besonders gleichmäßige Abtastung der erwarteten Umgebung des Bildmerkmals im zweiten Bild erreicht werden. Der Satz der Bildfenster könnte beispielsweise 9, 25 oder 49 Bildfenster umfassen.

Gemäß Ausführungsformen umfasst der Satz der Bildfenster weniger als 10 Bildfenster, insbesondere 9, 5 oder 3 oder weniger als 3 Bildfenster. Eine Reduzierung der Anzahl der Bildfenster könnte eine Steigerung der Effizienz des Verfahrens bei der Verwendung von Computing-Ressourcen bewirken. Mit den Anzahlen 9, 5 oder 3 könnte eine punktsymmetrische Anordnung des Satzes der Bildfenster auf besonders einfache Weise erzielt werden. Durch geschickte Platzierung der reduzierten Anzahl von Bildfenstern, wie im weiteren Verlauf der vorliegenden Offenbarung ausführlicher beschrieben, könnte eine isotrope Abdeckung der vermuteten Umgebung des Bildmerkmals mit ausreichender Genauigkeit angenähert werden. Eine Reduzierung der Anzahl der Bildfenster könnte aufgrund einer geschickten Vorhersage der wahrscheinlichen Verschiebungs- oder Bewegungsrichtung des Bildmerkmals vom ersten zum zweiten Bild, wie im weiteren Verlauf der vorliegenden Offenbarung ausführlicher beschrieben, ermöglicht werden.

Gemäßder Erfindung umfasst der Satz der Bildfenster ein initiales Bildfenster, wobei das Verfahren eine Detektion einer Kante in dem initialen Bildfenster umfasst, wobei das Bestimmen der nebst dem initialen Bildfenster im Satz der Bildfenster enthaltenen Bildfenster auf Basis der detektierten Kante erfolgt. Eine Verwendung eines initialen Bildfensters könnte eine iterative Abtastung der Umgebung des Bildmerkmals erlauben, bei der dem Satz von Bildfenstern im zweiten Bild sukzessive (z.B. abwechselnd auf zwei oder mehreren Seiten des initialen Fensters) weitere Fenster hinzugefügt werden könnten. Die Richtung der Kante könnte eine Vorzugsrichtung definieren, sodass die Fenster z.B. in einer parallel und / oder senkrechten Anordnung relativ zur Kantenrichtung angeordnet werden könnten.

Die Detektion einer Kante kann vorzugsweise mithilfe eines Strukturtensors oder einer Autokorrelationsmatrix erfolgen, wie sie z.B. aus dem Lucas-Kanade-Verfahren bekannt ist. Die Eigenwerte des Strukturtensors weisen an einer Kante einen deutlichen Betragsunterschied auf und der dem größeren Eigenwert entsprechende Eigenvektor gibt eine Haupt- oder Vorzugsrichtung an, die im Fall einer Kante etwa der Tangentensteigung der Kante im betrachteten Punkt entspricht. Es sind jedoch auch andere Operatoren aus dem Stand der Technik bekannt, die je nach beabsichtigter Anwendung gleichermaßen zur Kantendetektion verwendet werden können, so z.B. der Sobel-Operator, der Scharr-Operator, der Laplace-Filter, der Prewitt-Operator usw.

Eine detektierte Kante legt typischerweise eine lokale Vorzugsrichtung fest (Tangentensteigung), die mit wachsender Entfernung vom Bezugspunkt, in dem die Kantenrichtung bestimmt wurde, von der Vorzugsrichtung abweichen kann. Um die lokale Beschränkung der Datenbasis für die Kantenrichtungsbestimmung zu mildern, könnte daher eine Richtungsquantisierung vorteilhaft sein, d.h. eine Zuordnung der ermittelten tatsächlichen Kantensteigung in eine Richtungskategorie. In einem Beispiel sind die Richtungskategorien in Vielfachen von 45° gegeben, d.h. 0° (äquivalent zu 180°), 45° (äquivalent zu 225°), 90° (äquivalent zu 270°) und 135° (äquivalent zu 315°). In diesem Beispiel würde etwa eine Kante mit lokaler Tangentensteigung 104° der Kategorie 90° zugeordnet und eine Kante mit lokaler Tangentensteigung 351° der Kategorie 0°.

Gemäß Ausführungsformen sind die Bildfenster des Satzes der Bildfenster senkrecht zur detektierten Kante hintereinander angeordnet. Der Annahme folgend, dass Verdeckungen der Kante bevorzugt einem optischen Fluss senkrecht zur Kantenrichtung erfolgen, könnte dies eine Reduktion der Anzahl der Bildfenster auf beispielsweise 5 oder 3 erlauben. Gegenüber einer quasi-isotropen Anordnung von Bildfenstern in zwei oder mehr linear unabhängigen Richtungen würden dann die Fenster parallel zur Kantenrichtung wegfallen. Dies könnte eine Steigerung der Effizienz bei der Verwendung von Computing-Ressource ermöglichen.

Gemäß Ausführungsformen wird zum Erhalt des Teils des Satzes der Bildfenster das initiale Bildfenster nicht berücksichtigt. Der Annahme folgend, dass detektierbare Bewegungen des Bildmerkmals eine Verschiebung weg von der Ausgangsposition bewirken, könnte somit die Anzahl der Bildfenster weiter gesenkt werden, beispielsweise auf 4 oder 2 Fenster. Dies könnte eine weitere Steigerung der Effizienz bei der Verwendung von Computing-Ressource ermöglichen.

Gemäß Ausführungsformen wird zum Erhalt des Teils des Satzes der Bildfenster ein zufällig ausgewählter Satz der Bildfenster nicht berücksichtigt. Eine zufällige Streichung einzelner Fenster wird eine zufällige Anordnung der übrigen Fenster des Satzes bewirken. Ist aufgrund der Zufallsanordnung unter den übrigen Fenstern keines zur adäquaten Verfolgung des Bildmerkmals geeignet, so könnte dieser Effekt bei einer großen Zahl nachverfolgter Bildmerkmale vernachlässigbar sein, d.h. im Mittel über alle Bildmerkmale des Bilds könnte immer noch ein ausreichend hohes Güteniveau erzielt werden. Somit könnte dies ein alternativer oder zusätzlicher Ansatz zur Reduzierung der Anzahl der Bildfenster des Satzes von Bildfenstern sein.

Gemäß Ausführungsformen erfolgt die Identifikation des zumindest einen Teils des Satzes der Bildfenster in dem zweiten Bild unter Verwendung einer optischen Fluss-Bestimmungsmethode. Der optische Fluss kann Informationen über Richtung und Entfernung einer Verschiebung des Bildmerkmals und / oder seiner Umgebung liefern. Auf diese Weise könnte der Bildbereich für die Identifizierung der Bildfenster genauer lokalisiert werden. Dies könnte insbesondere dann hilfreich sein, wenn der Bilddifferenz zwischen dem ersten und dem zweiten Bild eine hohe Geschwindigkeit bzw. ein großer Blickwinkelunterschied zugrunde liegt, sodass die Verschiebungsentfernung vergleichbar mit der oder größer als die Abmessung der Bildfenster oder dem vom gesamten Satz der Bildfenster umschlossenen Bereich wird. Zur groben Lokalisierung bei verminderter Ressourcennutzung könnte der optische Fluss auf der Basis von Kopien des ersten und zweiten Bildes mit reduzierter Auflösung bestimmt werden (Bildpyramide) und die eigentliche Identifikation oder Platzierung der Bildfenster erfolgt dann im zweiten Bild bei der ursprünglichen Auflösung.

Gemäß Ausführungsformen handelt es sich bei der optischen Fluss-Bestimmungsmethode um die Lucas-Kanade-Methode oder die Horn-Schunck-Methode. Diese Verfahren könnten im Vergleich zu rechenaufwändigeren Algorithmen eine effizientere Nutzung der verwendeten Computing-Ressourcen ermöglichen.

Gemäß Ausführungsformen erfolgt die Detektion der Kante basierend auf dem Strukturtensor der Harris-Methode oder der Lucas-Kanade-Methode. Der Strukturtensor ist auch als Autokorrelationsmatrix bekannt und lautet in einer beispielhaften Darstellung:

$$\mathbf{G} = \sum_{x,y \in \Omega} \begin{pmatrix} g_x^2(x,y) & g_x(x,y) \cdot g_y(x,y) \\ g_x(x,y) \cdot g_y(x,y) & g_y^2(x,y) \end{pmatrix}$$

wobei die Summe über alle Positionen $(x,y)$ des Fensters $\Omega$ läuft und $g_x(x,y)$ und $g_y(x,y)$ die Gradienten des Bildsignals in x- bzw. y- Richtung an der Position $(x,y)$ sind. Wurde der Strukturtensor bereits zu einem früheren Zeitpunkt berechnet, so könnte er für die Kantendetektion erneut verwendet werden, ohne dass ein spezifischer Kantenoperator berechnet werden muss. Wird hingegen der Strukturtensor zur Kantendetektion erstmalig berechnet, so könnte eine erneute Berechnung des Strukturtensors beim Schritt des Schätzens der Bewegung der Bildposition entfallen. In beiden Fällen könnte der Vorteil einer effizienteren Nutzung von Computing-Ressourcen erreicht werden.

In einem Beispiel verwendet das Verfahren sowohl den Harris-Operator (det $G$ + k * (Spur($G$))$^2$, wobei G ein Strukturtensor und kein z.B. empirisch bestimmter Parameter ist) als auch ein Verfahren zur Bestimmung des optischen Flusses. Beispielsweise weist der Satz ein zentrales Bildfenster auf, um das herum die übrigen Fenster des Satzes spiegel- oder punktsymmetrisch angeordnet sind. Gemäß dem Beispiel wird der Harris-Operator nur zur Kantendetektion innerhalb des zentralen Fensters angewendet. Somit könnte im zentralen Fenster eine Kante mit hoher Genauigkeit detektiert werden, um eine präzise Platzierung des zentralen Fensters zu ermöglichen. In den übrigen Fenstern des Satzes könnte dann die Kante mithilfe des Strukturtensors nach Lucas-Kanade oder Horn-Schunck detektiert werden. Gegenüber einer Anwendung des Harris-Operators in allen Fenstern könnte auf diese Weise ein zusätzlicher Rechenaufwand bei einer späteren Berechnung des optischen Flusses für die übrigen Fenster vermieden werden. Das zentrale Fenster kann beispielsweise das initiale Fenster sein.

Gemäß Ausführungsformen umfasst das Bestimmen der nebst dem initialen Bildfenster im Satz der Bildfenster enthaltenen Bildfenster auf Basis der detektierten Kante: Bestimmung einer ersten Richtung basierend auf dem Eigenvektor des Strukturtensors, welcher zum größten Eigenwert korrespondiert, sowie Bestimmung einer zweiten Richtung senkrecht zur ersten Richtung, wobei die nebst dem initialen Bildfenster im Satz der Bildfenster enthaltenen Bildfenster entlang der zweiten Richtung angeordnet sind. Unter der Annahme, dass die Richtung des Eigenvektors zum größeren Eigenwert der Erstreckungsrichtung der Kante entspricht, könnte so die Kantenrichtung ermittelt werden, ohne hierzu einen spezifischen Kantendetektionsoperator anzuwenden. Auch in diesem Fall könnte eine Winkelbereichseinteilung oder Richtungsquantisierung, wie zuvor beschrieben, zum Einsatz kommen.

Gemäß Ausführungsformen erfolgt die Schätzung der Bewegung auf Basis des Positionsunterschieds des ausgewählten Bildfensters zwischen dem ersten Bild und dem zweiten Bild. Der Differenzvektor zwischen dem Fenster im zweiten Bild und dem diesem zugeordneten Fenster im ersten Bild könnte als Verschiebung des Bildmerkmals interpretiert werden, sodass eine Annäherung an die tatsächliche Verteilung des optischen Flusses erhalten werden könnte, ohne den optischen Fluss explizit zu berechnen. Auf diese Weise könnte die Effizienz der Computing-Ressourcennutzung weiter gesteigert werden.

Gemäß Ausführungsformen umfasst das Schätzen der Bewegung eine Identifikation des ausgewählten Bildfensters im zweiten Bild, wobei

- für jedes Bildfenster des zumindest einen Teils des Satzes der Bildfenster die Identifikation des Bildfensters in dem zweiten Bild iterativ mit einer ersten Anzahl von Iterationsschritten für verschiedene Positionen des jeweiligen Bildfensters in dem zweiten Bild erfolgt, und
- die Identifikation des ausgewählten Bildfensters im zweiten Bild iterativ mit einer zweiten Anzahl von Iterationsschritten für verschiedene Positionen der ausgewählten Bildfensters in dem zweiten Bild erfolgt,

wobei die zweite Anzahl größer ist als die erste Anzahl.

Aufgrund des iterativen Ansatzes könnte auf diese Weise eine Identifizierung der Fenster mit einer höheren Güte erreicht werden und somit die Bewegung mit einer höheren Genauigkeit geschätzt werden. Mit einer begrenzten Anzahl von ersten Iterationsschritten könnte eine vergleichsweise grobe Positionierung der Fenster im zweiten Bild erreicht werden, während sich die zweiten Iterationsschritte für die eigentliche Schätzung der Bewegung mit hoher Genauigkeit auf das ausgewählte Fenster beschränken. Beispielsweise könnte es sich bei der ersten und / oder zweiten Anzahl von Iterationsschritten um die Iterationen des Lucas-Kanade-Verfahrens handeln.

Gemäß Ausführungsformen erfolgt das Schätzen der Bewegung unter Verwendung einer optischen Fluss-Bestimmungsmethode. Dies könnte den Vorteil einer genaueren Schätzung der Bewegung bieten.

Gemäß Ausführungsformen erfolgt

- für jedes Bildfenster des zumindest einen Teils des Satzes der Bildfenster die Identifikation des Bildfensters in dem zweiten Bild iterativ bei einer ersten Anzahl verschiedener Bildauflösungen des ersten und zweiten Bildes, wobei ausgehend von der niedrigsten Bildauflösung das Resultat der Identifikation des Bildfensters zur Identifikation des Bildfensters bei einer höheren Bildauflösung verwendet wird, und
- die Identifikation des ausgewählten Bildfensters in dem zweiten Bild iterativ bei einer zweiten Anzahl verschiedener Bildauflösungen des ersten und zweiten Bildes, wobei ausgehend von der niedrigsten Bildauflösung das Resultat der Identifikation des ausgewählten Bildfensters zur Identifikation des ausgewählten Bildfensters bei einer höheren Bildauflösung verwendet wird,

wobei die erste Anzahl kleiner ist als die zweite Anzahl.

Auf diese Weise könnte der Verschiebungsvektor des Bildmerkmals mit hoher Genauigkeit bestimmt werden. In einem Beispiel sind die verschiedenen Bildauflösungen Teile einer Bildpyramide, die z.B. zu Beginn des Verfahrens bereits fertig berechnet vorliegt. In dem Beispiel berechnet ein pyramidal-iterativer Algorithmus in jedem Iterationsschritt den optischen Fluss, beispielsweise unter Anwendung des Lucas-Kanade- oder des Horn-Schunck-Verfahrens. Die Erhöhung der zweiten Anzahl gegenüber der ersten Anzahl könnte bewirken, dass die Gesamtzahl von Iterationsschritten ausschließlich zur Identifikation des ausgewählten Fensters ausreichend hoch für eine Platzierung mit hoher räumlicher Präzision ist. Somit könnte ein vergleichbarer Rechenaufwand für die nicht ausgewählten Fenster eingespart werden.

Gemäß Ausführungsformen

- weist der Teil des Satzes der Bildfenster in dem zweiten Bild erste Bildgrößen auf, und
- wird zur Schätzung der Bewegung der Bildposition des Bildmerkmals das ausgewählte Bildfenster gegenüber der zugehörigen ersten Bildgröße vergrößert.

Dies könnte eine Vergrößerung der Datenbasis für die Schätzung der Bewegung im Vergleich zur Identifizierung der Fenster im zweiten Bild bewirken. Dadurch dass vor der Schätzung der Bewegung kleinere Bilder verwendet werden, könnten zur Bestimmung des ausgewählten Bildfensters verwendete Computing-Ressourcen effizienter genutzt werden. Erst zur eigentlichen Bewegungsabschätzung wird die Bildgröße erhöht. Somit könnte die Schätzung der Bewegung mit einer höheren Genauigkeit als die Positionierung der zu identifizierenden Fenster im zweiten Bild erfolgen.

Gemäß Ausführungsformen ist bezüglich eines gegebenen Bildfensters des Teils des Satzes der Bildfenster im ersten Bild die Bewertung der Güte ausgewählt aus einem der folgenden Kriterien:

- Ausgehend vom identifizierten Bildfenster im zweiten Bild, Identifikation eines hierzu zugehörigen Bildfensters im ersten Bild, wobei die Bewertung der Güte ein Maß für die Deckungsgleichheit des identifizierten hierzu zugehörigen Bildfensters im ersten Bild mit dem gegebenen Bildfenster des Satzes von Bildfenstern im ersten Bild ist, wobei optional die Identifikation des hierzu zugehörigen Bildfensters im ersten Bild unter Verwendung einer optischen Fluss-Bestimmungsmethode erfolgt;
- Bestimmung eines Streumaßes des Bildinhaltes des Bildfensters im ersten Bild in Bezug auf das identifizierte Bildfenster im zweiten Bild, wobei die Bewertung der Güte auf dem Streumaß basiert;
- Bestimmung der Langrangeschen Kosten eines Streumaßes des Bildinhaltes des Bildfensters im ersten Bild in Bezug auf das identifizierte Bildfenster im zweiten Bild und einem weiteren Maß, wobei das weitere Maß auf einer der folgenden Varianten basiert:

  i. Dem Gradienten des Bildinhaltes des Bildfensters im ersten Bild oder im zweiten Bild;
  ii. Dem Strukturtensor der Harris-Methode oder der Lucas-Kanade-Methode;
  iii. Einem Cornerness-Maß des Bildinhaltes des Bildfensters im ersten Bild oder im zweiten Bild.

Gemäß dem ersten Kriterium ("Rücksprungkriterium") wird davon ausgegangen, dass ausgehend vom Bildfenster im ersten Bild zunächst das zugehörige Bildfenster im zweiten Bild mit einer entsprechenden Identifikationsmethode (z.B. Lucas-Kanade) identifiziert wird. In umgekehrter Weise müsste dasselbe gelten, wenn die Identifikation richtig war: Geht man nun also von dem identifizierten Bildfenster im zweiten Bild aus und bestimmt mit derselben Identifikationsmethode, welches Bildfenster im ersten Bild dem zugehörig ist, so müsste das hieraus resultierende Ergebnis, d.h. ein "Rücksprungfenster" im ersten Bild, mit dem ursprünglichen Bildfenster im ersten Bild deckungsgleich sein. Die Deckungsgleichheit kann zum Beispiel auf Basis der Bildposition von ursprünglichem Bildfenster und Rücksprungfenster oder von Bildinformationen aus einer Umgebung der jeweiligen Bildposition von ursprünglichem Bildfenster und Rücksprungfenster bestimmt werden. Als Gütekriterium könnte beispielsweise die Länge des Differenzvektors zwischen dem ursprünglichen Bildfenster und dem Rücksprungfenster dienen, wobei Deckungsgleichheit bei Länge null des Differenzvektors hergestellt wäre.

Gemäß dem zweiten Kriterium ("Streukriterium") werden Unterschiede zwischen den Bildinhalten des Fensters im ersten und im zweiten Bild durch ein Streumaß quantifiziert. Beispielsweise könnte ein unbewegliches Objekt in einer unbeweglichen Umgebung bei konstanten Lichtverhältnissen sowie einer Verwendung einer identischen und unbeweglichen Bilderfassungsvorrichtung für beide Bilder auf beiden Bildern einen nahezu identischen Bildinhalt in einer Umgebung des Bildmerkmals ergeben, was einem Streumaß nahe null entsprechen könnte. Im Gegenzug könnte eine Verdeckung des Bildmerkmals ein betragsmäßig großes Streumaß ergeben. Ein Streumaß könnte beispielsweise für jedes Pixel differenziell berechnet werden (z.B. Differenz der Bildsignale oder dessen Quadrat) und zeilen- und / oder spaltenweise aufsummiert oder gemittelt werden. Denkbar wäre z.B. die Summe der quadratischen Abweichungen, die Standardabweichung oder die Varianz über alle Pixel im korrespondierenden Fensterpaar. Eine Verwendung des Streukriteriums könnte eine operatorbasierte Auswertung des Gütemaßes überflüssig machen und so zu einer effizienten Nutzung von Computing-Ressourcen beitragen.

Gemäß dem dritten Kriterium ("Lagrange-Kriterium") wird zum vorstehend diskutierten Streumaß A noch ein weiteres Maß B hinzugezogen, um ein Lagrange'sches Kostenmaß $L = A + w * B$ mit einem Gewichtungsfaktor $w$ zu definieren. Durch Berücksichtigung des weiteren Maßes B könnte beispielsweise das Risiko einer falsch positiven Zuordnung gesenkt werden. Ein geeigneter Wert für den Gewichtungsfaktor $w$ kann beispielsweise durch Trainieren eines Machine-Learning-Modells oder auch empirisch ermittelt werden. Gemäß Variante iii kann B ein Cornerness-Maß aufweisen, wie beispielsweise die Cornerness-Response-Funktion nach Harris und Stephens, die Determinante oder Spur der Hesse-Matrix oder weitere Verfahren, die den Laplace-Operator und / oder einen Gauß'schen Filter verwenden.

Gemäß Ausführungsformen umfasst das Streumaß einen mittleren oder absoluten quadratischen Fehler. Dies könnte eine weitere Steigerung der Effizient der Nutzung von Computing-Ressourcen durch Vereinfachung der Berechnung des Gütemaßes bewirken.

Gemäß Ausführungsformen

- ist das identifizierte Bildfenster im zweiten Bild gegenüber dem gegeben Bildfenster im ersten Bild um einen ersten Vektor verschoben,
- ist das hierzu zugehörige Bildfenster im ersten Bild gegenüber dem identifizierten Bildfenster im zweiten Bild um einen zweiten Vektor verschoben, und
- berücksichtigt die Bewertung der Güte einen Vergleich des ersten und zweiten Vektors.

Bei Verwendung des vorstehend beschriebenen Rücksprungkriteriums könnte ein vektorieller Vergleich der Verschiebung zwischen dem Ursprungsfenster und dem Fenster im zweiten Bild ("erster Verschiebungsvektor", "erste Verschiebung") mit der Verschiebung zwischen dem Fenster im zweiten Bild und dem Rücksprungfenster ("zweiter Verschiebungsvektor", "zweite Verschiebung") zusätzlich zur von der jeweiligen Verschiebung bewirkten Distanz eine Richtungsinformation der jeweiligen Verschiebung berücksichtigen. Beispielsweise sollten bei vollständiger Deckungsgleichheit des Ursprungsfensters mit dem Rücksprungfenster beide Komponenten des zweiten Verschiebungsvektors umgekehrte Vorzeichen wie die entsprechenden Komponenten des ersten Verschiebungsvektors aufweisen. Ist dies in einem gegebenen Szenario nicht der Fall, so könnte dies ein Hinweis auf vorhandenes Optimierungspotenzial bei der Identifizierung sein. Dies könnte beispielsweise durch Abzüge in die Berechnung des Gütemaßes einfließen.

In einem weiteren Aspekt betrifft die Erfindung ein wie im Anspruch 19 definiertes Computerprogrammprodukt mit von einem Prozessor ausführbaren Instruktionen zur Durchführung des hierin offenbarten Verfahrens.

In einem weiteren Aspekt betrifft die Erfindung eine wie im Anspruch 20 definierte Vorrichtung zur Schätzung der Bewegung einer Bildposition eines Bildmerkmals zwischen einem ersten Bild und einem zweiten Bild.

Weitere Vorteile und Merkmale ergeben sich aus der nachfolgenden Beschreibung in Verbindung mit den beigefügten Zeichnungen. In diesen zeigen:

Figur 1          einen Bildausschnitt aus einem ersten Bild;

Figur 2          einen Bildausschnitt aus einem zweiten Bild;

Figur 3          einen Satz von Bildfenstern;

Figur 4            eine Anwendung eines Rücksprungkriteriums;

Figur 5            eine iterative Bestimmung eines Verschiebungsvektors;

Figur 6A           einen Bildausschnitt mit einem Bildmerkmal in der Nähe einer Kante;

Figur 6B           einen Bildausschnitt mit einer Kante und zwei Eigenvektoren eines Strukturtensors;

Figur 6C           einen Bildausschnitt mit einer Kante und einem Satz von Bildfenstern;

Figuren 6D bis 6G   jeweils eine Anordnung von drei Bildfenstern gemäß einer Richtungskategorie;

Figur 6H           einen Satz von Richtungskategorien; und

Figur 7            ein Blockdiagramm, illustrierend ein Verfahren zur Schätzung der Bewegung einer Bildposition eines Bildmerkmals zwischen einem ersten Bild und einem zweiten Bild.

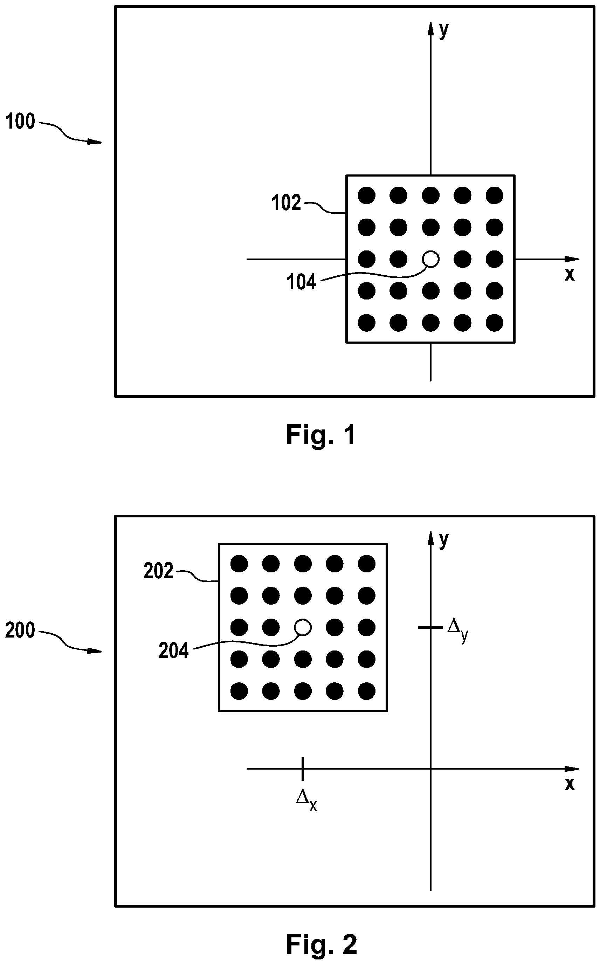

Figur 1 zeigt schematisch einen Bildausschnitt 100 aus einem ersten Bild, bei dem ein Bildmerkmal 104 (dargestellt als weißer Kreis) und ein Bereich von das Bildmerkmal 104 umgebenden Pixeln (dargestellt als schwarze Kreise) von einem Bildfenster 102 umschlossen sind. Das Bildfenster 102 ist quadratisch mit der Kantenlänge (2 N + 1) pel = 5 pel und das Bildmerkmal 104 liegt an der zentralen Position (2,2) des Bildfensters 102, d.h. das Bildmerkmal 104 ist innerhalb des Bildfensters 102 in jeder der Bilddimensionen x und y von N = 2 Pixeln umgeben. Das Bildfenster 102 ist mit einem x-y-Koordinatensystem unterlegt, dessen Ursprung an der Position des Bildmerkmals 104 liegt.

Figur 2 zeigt schematisch einen Bildausschnitt 200 aus einem zweiten Bild. Der Bildausschnitt 200 zeigt einen Bildbereich von identischer Position und Ausdehnung in x und y wie der Bildbereich 100 aus dem ersten Bild. Der Bildausschnitt 200 zeigt ebenfalls ein Koordinatensystem mit Ursprung an derselben Position wie das Koordinatensystem im Bildausschnitt 100. Das zweite Bild bildet die dem Bildmerkmal 104 zugrunde liegende Objektstruktur zu einem anderen Zeitpunkt und / oder aus einem anderen Blickwinkel innerhalb des Bildausschnitts 200 als Bildmerkmal 204 ab. Das Bildmerkmal 204 ist daher gegenüber der Position des Bildmerkmals 104 im Bildausschnitt 100 (also dem Ursprung des Koordinatensystems) um eine Verschiebung $\Delta$x in x-Richtung sowie eine Verschiebung $\Delta$y in y-Richtung verschoben.

Das Bildmerkmal 204 wurde beispielsweise anhand seines Bildsignalwerts (Helligkeit, Intensität), seiner Farbe (Verteilung des Bildsignals auf verschiedene Bildkanäle), Gradienten des Bildsignals in x- und / oder y-Richtung, einem Vergleich von Bildinformationen in seiner Umgebung oder einer Kombination der genannten Kriterien mit dem Bildmerkmal 104 im Bildausschnitt 100 identifiziert. Aufgrund der Identifikation des Bildmerkmals 204 mit dem Bildmerkmal 104 wurde ein Fenster 202 mit dem Bildfenster 104 identifiziert, welches das Bildmerkmal 204 sowie einen Bereich von das Bildmerkmal 204 umgebenden Pixeln umschließt. Das Bildfenster 202 ist wie das Bildfenster 102 quadratisch mit der Kantenlänge (2 N + 1) pel = 5 pel und das Bildmerkmal 204 liegt an der zentralen Position (2,2) des Bildfensters 202.

Figur 2 stellt den Idealfall einer vollständig korrelierten Identifikation dar, bei dem das Bildfenster 202 relativ zum Bildmerkmal 204 identisch positioniert ist wie das Bildfenster 102 relativ zum Bildmerkmal 104. Dies trifft jedoch im Allgemeinfall nicht notwendigerweise zu. Geht man allgemein davon aus, dass die dem Bildmerkmal 104 zugrunde liegende Objektstruktur im zweiten Bild durch ein Bildmerkmal 204 wiedergegeben wird, das innerhalb eines Bildbereichs liegt, der bei identischer Position und Größe im ersten Bild das Bildmerkmal 104 innerhalb einer Umgebung des Bildmerkmals 104 umfassen würde, so besteht ein Ansatz zur Identifikation des Bildmerkmals 204 darin, einen Satz von Bildfenstern zu erzeugen, der diese Umgebung abdeckt, d.h. dessen Bildfenster so angeordnet sind, dass jedes Pixel der Umgebung von mindestens einem Bildfenster des Satzes umschlossen wird. Fordert man zur Identifikation des Bildmerkmals, dass jedes Bildfenster des Satzes im ersten Bild so angeordnet ist, dass es auch das Bildmerkmal 104 umschließt, so entspricht die Verschiebung des Bildmerkmals vom ersten zum zweiten Bild einer Transformation zwischen einem Fenster 102 und einem Fenster 202 des Satzes von Bildfenstern.

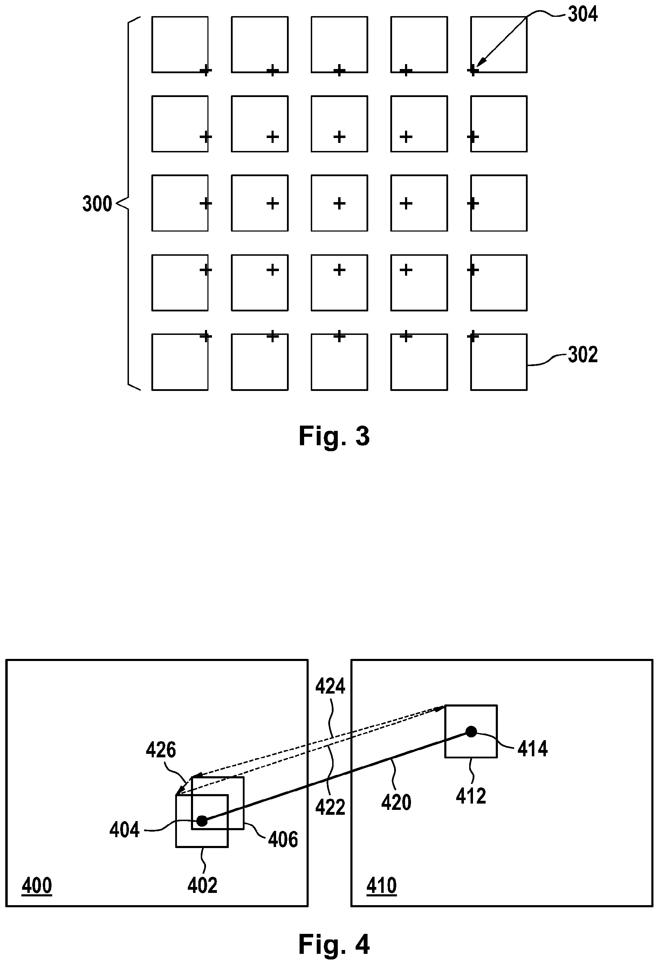

Figur 3 zeigt einen beispielhaften Satz 300 von 25 quadratischen Bildfenstern 302 mit einer Kantenlänge von 5 Pixeln, die zur Abrasterung eines Bezugspixels 304 (dargestellt als Kreuz "+"), beispielsweise an der Position $(x_0, y_0)$, in einer der 25 von jedem Bildfenster erfassten Positionen geeignet sind. Die Figur zeigt 25 Kopien desselben Bezugspixels 304 aufgeteilt auf fünf Zeilen und fünf Spalten, sodass die relative Positionierung jedes Fensters 302 bezüglich des Bezugspixels 304 deutlich wird. Bei Platzierung des Satzes 300 im ersten Bild fallen die 25 Kopien des Referenzpixels 304 in einem einzigen Pixel des ersten Bildes zusammen und die 25 Bildfenster 302 bilden eine Überdeckung eines quadratischen Bereichs mit einer Abmessung von 9x9 Pixeln, der das Referenzpixel 304 in jeder Bilddimension auf einer Länge von vier Pixeln umgibt. Bei identischer Platzierung des Satzes 300 im zweiten Bild wird von dem Satz 300 (als Satz 300' mit 25 Bildfenstern 302', nicht in der Figur gezeigt) jedes Bildmerkmal des zweiten Bildes erfasst, welches vollständig innerhalb des 9x9-Überdeckungsbereichs um die der Position des Bildmerkmals entsprechenden Position liegt.

Figur 4 illustriert ein Beispiel für eine Bewertung der Güte der Zuordnung eines Fensters 412 in einem Bild 410 zu einem Ursprungsfenster 402 in einem ersten Bild 400 durch Anwendung eines Rücksprungkriteriums. Das erste Bild 400 weist ein Bildmerkmal 404 auf, das als Bildmerkmal 414 im zweiten Bild 410 zu sehen ist. Die Korrespondenz der Bildmerkmale 404 und 414 ist durch Verschiebungspfeil 420 angedeutet und die Identifikation des Bildfensters 412 mit dem Ursprungsfenster 402 ist durch Verschiebungspfeil 422 angedeutet. Das Rücksprungkriterium sieht nun vor, die Identifikation eines Bildfensters für das Bildfenster 412 als Ausgangsstruktur im ersten Bild zu wiederholen. Das Ergebnis dieser Wiederholung ist ein Rücksprungfenster 406 im ersten Bild, dessen Identifikation mit dem Bildfenster 412 durch Verschiebungspfeil 424 angedeutet ist.

Wie zu erkennen ist, befindet sich das Rücksprungfenster 406 nicht an derselben Position wie das Ursprungsfenster 402, d.h. die Fenster 402 und 406 sind nicht deckungsgleich. Dies ist durch den Differenzpfeil 426 angedeutet, der der Vektorsumme der Pfeile 422 und 424 entspricht. Ein Ansatz zur Auswahl eines Bildfensters könnte somit darin bestehen, das Rücksprungkriterium für jedes Bildfenster des im zweiten Bild 410 identifizierten Teils des Satzes von Bildfenstern zu wiederholen und dasjenige Bildfenster auszuwählen, dessen jeweiliger Differenzpfeil 426, interpretiert als Vektor, den kleinsten Betrag aufweist. Bei betragsgleichen Differenzvektoren (Vektorsumme der im Idealfall antiparallelen Verschiebungspfeile) könnte beispielsweise als Zusatzkriterium dasjenige Fenster ausgewählt werden, dessen Skalarprodukt mit dem Verschiebungspfeil 422 den größten Betrag (also die geringste Richtungsabweichung vom antiparallelen Fall) aufweist.

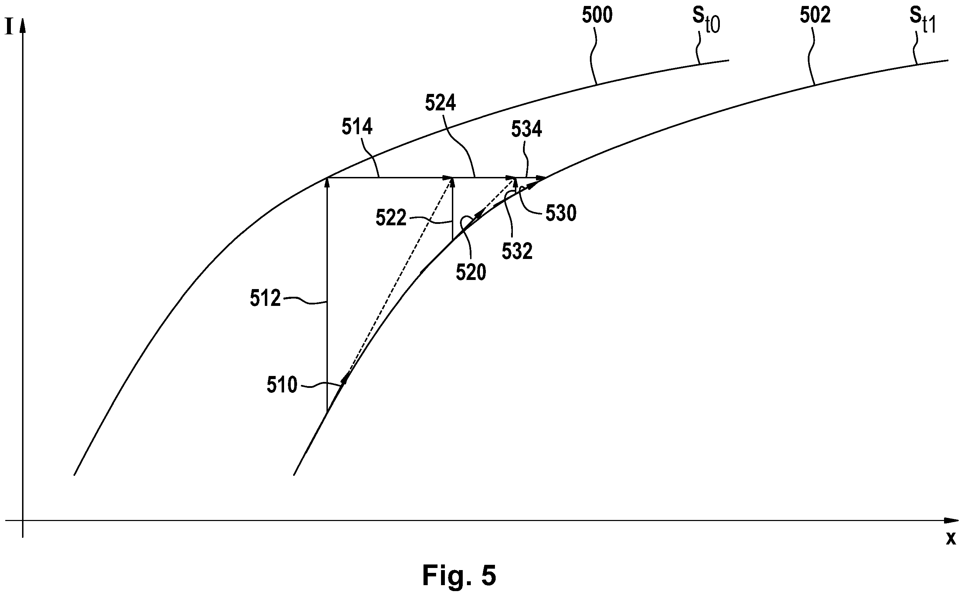

Figur 5 illustriert einen Ansatz zur iterativen Bestimmung eines Verschiebungsvektors zwischen einem Bildmerkmal in einem ersten Bild und einem Bildmerkmal in einem zweiten Bild, wie er etwa der Bestimmung des optischen Flusses nach dem iterativen Lucas-Kanade-Verfahren mithilfe von Bildpyramiden zum Einsatz kommt. Das erste Bild bildet eine Objektstruktur zu einem Zeitpunkt $t_0$ ab und das zweite Bild bildet die Objektstruktur zu einem Zeitpunkt $t_1$ ab. Das gezeigte Diagramm (x-Achse: Ort; y-Achse: Bildsignal) veranschaulicht die Helligkeitsverteilung 500 innerhalb einer Bildzeile des ersten Bildes, die das Bildmerkmal aufweist, zusammen mit der Helligkeitsverteilung 502 innerhalb einer Bildzeile des zweiten Bildes, die das Bildmerkmal aufweist. Das nachstehend diskutierte Beispiel geht von einer Bildpyramide mit drei verschiedenen Auflösungen jeweils für das erste und das zweite Bild aus.

Das Verfahren beginnt mit einer Bestimmung eines ersten Verschiebungsvektors, durch Vergleich des ersten Bildes mit dem zweiten Bild auf der niedrigsten verfügbaren Auflösungsstufe. Im gezeigten Beispiel geschieht dies durch Bestimmung eines Gradienten 510 des Bildsignals zwischen der auf das zweite Bild projizierten Position des Bildmerkmals und der Position des Bildmerkmals im zweiten Bild. Dieser entspricht einem Signalunterschied 512 und einem Ortsunterschied 514 (das Diagramm zeigt eine Zeilenprojektion des ersten Verschiebungsvektors auf die höchste Auflösungsstufe). Nach Projektion des ersten Verschiebungsvektors auf eine höhere Auflösungsstufe, also im Beispiel auf die Zwischenstufe zwischen der niedrigsten und der höchsten Auflösung, wird ein zweiter Verschiebungsvektor anhand eines Gradienten 520 des Bildsignals zwischen dem Verschiebungsende des projizierten Verschiebungsvektors und der Position des Bildmerkmals auf der Zwischenstufe bestimmt. Dieser entspricht einem Signalunterschied 522 und einem Ortsunterschied 524 (erneut in Zeilenprojektion auf der höchsten Stufe). Durch Wiederholung auf der höchsten Auflösungsstufe erhält man schließlich den letzten dritten Verschiebungsvektor, entsprechend einem Signalunterschied 532 und einem Ortsunterschied 534 in Zeilenprojektion, zwischen dem Verschiebungsende des auf die höchste Auflösungsstufe projizierten Verschiebungsvektors und dem Bildmerkmal. Man erhält so einen Gesamt-Verschiebungsvektor, der der Summe der drei auf den einzelnen Auflösungsstufen bestimmten Verschiebungsvektoren entspricht.

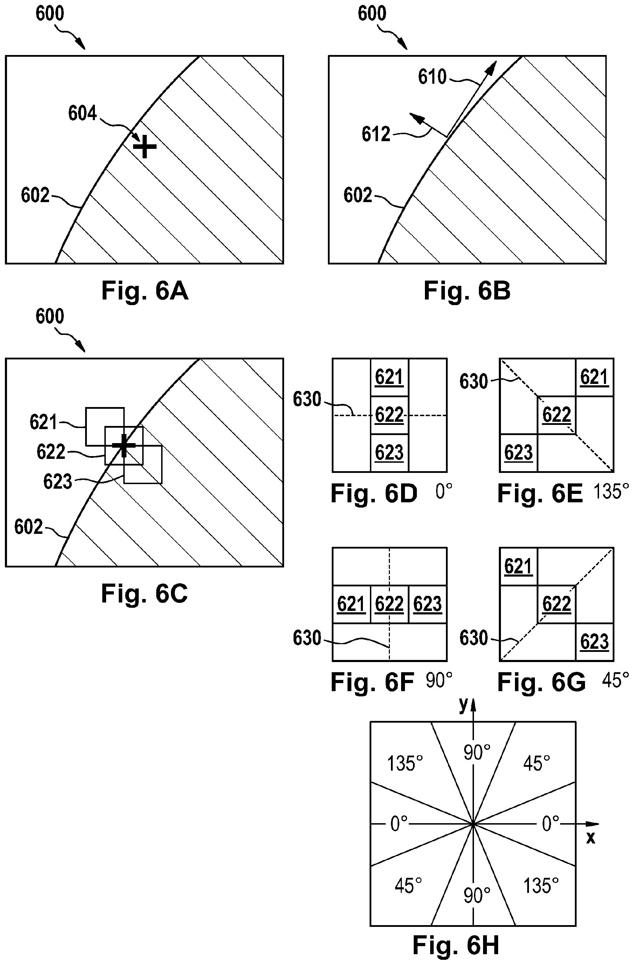

Die Figuren 6A bis 6H illustrieren eine beispielhafte Vorgehensweise zur Platzierung eines Satzes von drei Bildfenstern 621, 622, 623 um ein Bildmerkmal 604 in der Nähe einer Kante 602 in einem Bildausschnitt 600. Ein Strukturtensor zu einem Referenzpunkt auf der Kante liefert zwei Eigenwerte und dazugehörige Eigenvektoren 610, 612. Der betragsmäßig größere Eigenvektor 610 ist parallel zur Tangente an die Kante im Referenzpunkt ausgerichtet, der betragsmäßig kleinere Eigenvektor 612 steht senkrecht zum Eigenvektor 610. Das Bildraster des Bildausschnitts 600 definiert eine horizontale Richtung, mit der der Eigenvektor 610 einen Kantenwinkel von ca. 66° einschließt (wobei 0° der Horizontalen auf der rechten Seite des Bildausschnitts 600 entspricht).

Figur 6H zeigt einen Satz von Richtungskategorien zur Kategorisierung des Eigenvektors 610 in Kantenwinkel-Kategorien 0° (mindestens -22,5° und weniger als + 22,5° sowie mindestens 157,5° und weniger als 202,5°), 45° (mindestens 22,5° und weniger als 67,5° sowie mindestens 202,5° und weniger als 247,5°), 90° (mindestens 67,5° und weniger als + 112,5° sowie mindestens 247,5° und weniger als 292,5°) und 135° (mindestens 112,5° und weniger als + 157,5° sowie mindestens 292,5° und weniger als 337,5°). Der Winkelbereich 0° schließt die x-Achse ein, der Winkelbereich 90° die y-Achse.

In den Figuren 6D bis 6G ist der Verlauf einer Geraden 630 in jeweils einem der Referenz-Kantenwinkel 0° (Figur 6D), 45° (Figur 6G), 90° (Figur 6F) und 135° (Figur 6E) als gestrichelte Linie eingezeichnet. Bei Einordnung des Kantenwinkels in eine dieser Kategorien sieht der Platzierungsansatz vor, die Fenster 621, 622 und 623 senkrecht zum jeweiligen Referenz-Kantenwinkel zu platzieren. In den Figuren 6D bis 6G sind die drei Bildfenster 621, 622 und 623 schematisch in einer nicht-überlappenden Anordnung gezeigt, um das Prinzip zu verdeutlichen.

Der Kantenwinkel im Aufpunkt der beiden Eigenvektoren 610, 612 in Fig. 6B befindet sich im Winkelbereich der Kategorie 45°. Somit werden die Fenster 621, 622 und 623, wie in Figur 6C gezeigt, in einer überlappenden Konfiguration entsprechend der Anordnung in Figur 6G zentriert um das Bildmerkmal 604 platziert (alternativ zentriert um den Aufpunkt der Eigenvektoren 610, 612).

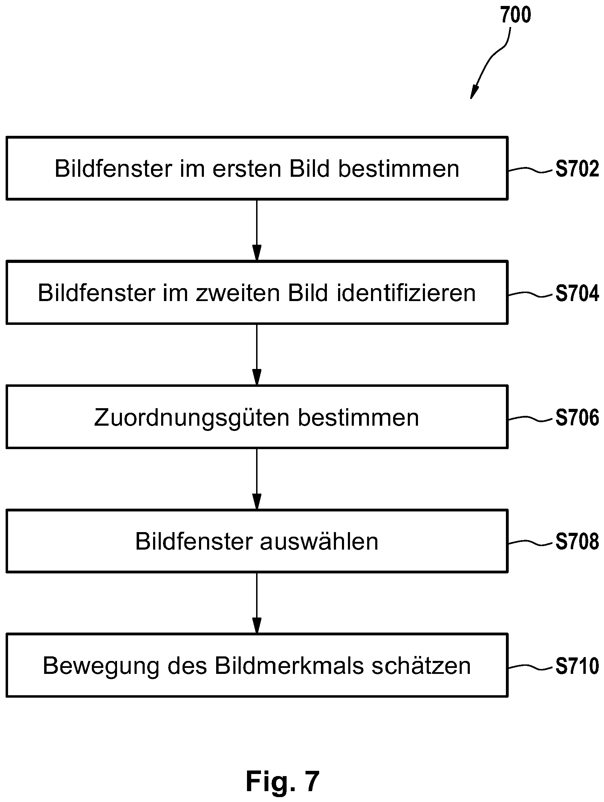

Figur 7 zeigt ein Blockdiagramm, illustrierend ein Verfahren zur Schätzung der Bewegung einer Bildposition eines Bildmerkmals zwischen einem ersten Bild und einem zweiten Bild. Beispielsweise aus einer vorhergehenden Ausführung eines Interest-Operators mit dem ersten bzw. dem zweiten Bild als Eingabe sind Bildmerkmale auf dem ersten und dem zweiten Bild bekannt. Gemäß dem Verfahren werden in einem Schritt S702 für ein gegebenes der Bildmerkmale Bildfenster eines Satzes von Bildfenstern an verschiedenen Positionen auf dem ersten Bild platziert, sodass jedes Bildfenster einen Bildbereich umschließt, der das Bildmerkmal vollständig enthält. Ein Beispiel für ein im ersten Bild platziertes Bildfenster ist das Bildfenster 102 in Figur 1, das das Bildmerkmal 104 in einem Bildbereich 100 eines ersten Bildes umschließt. Ein Beispiel für einen zu platzierenden Satz von Bildfenstern ist der Satz 300 von Bildfenstern 302 in Figur 3.

In einem Schritt S704 wird zumindest ein Teil der Bildfenster des Satzes in dem zweiten Bild identifiziert. Dies kann beispielsweise mithilfe eines vergleichenden Ansatzes geschehen oder etwa durch Platzieren von identischen Kopien der Bildfenster an mit den jeweiligen Positionen im ersten Bild identischen Positionen des zweiten Bildes. Ein vergleichender Ansatz kann beispielsweise eine Berechnung des optischen Flusses zwischen einem im ersten Bild platzierten Bildfenster und einem diesem zugeordneten, im zweiten Bild platzierten Bildfenster aufweisen. Die Identifikation bewirkt, dass jedem Bildfenster des im zweiten Bild platzierten Teils des Satzes von Bildfenstern ein Bildfenster aus dem Satz der im ersten Bild platzierten Bildfenster zugeordnet ist sowie jedem Bildfenster aus dem Satz der im ersten Bild platzierten Bildfenster höchstens eines der Bildfenster des im zweiten Bild platzierten Teils des Satzes von Bildfenstern zugeordnet ist. Ein Beispiel für ein im zweiten Bild platziertes Bildfenster ist das Bildfenster 202 in Figur 2, das das Bildmerkmal 204 in einem Bildbereich 200 eines zweiten Bildes umschließt. Ein Beispiel für eine Identifikation eines in einem zweiten Bild platzierten Bildfensters mit einem in einem ersten Bild platzierten Bildfenster ist durch den Pfeil 422 gegeben, der das im ersten Bild 400 platzierte Bildfenster 402 mit dem im zweiten Bild 410 platzierten Bildfenster 412 verbindet. Ein Beispiel für das Platzieren eines Teils eines Satzes von Bildfenstern wird durch die in Fig. 6C gezeigten Bildfenster 721, 722 und 723 veranschaulicht, wenn beispielsweise der zugrundeliegende Satz von im ersten Bild platzierten Bildfenstern die in Figur 3 angeordneten Bildfenster umfasst.

In einem Schritt S706 wird eine Gütegröße für jedes Bildfenster des Teils der im zweiten Bild platzierten Bildfenster berechnet. Die Gütegröße ist so definiert, dass sie einen Grad der Übereinstimmung beispielsweise des vom jeweiligen Bildfenster des zweiten Bildes umfassten Bildbereichs mit dem vom entsprechenden Bildfenster des ersten Bildes umfassten Bildbereich misst. Bei vollständiger Entsprechung oder Deckungsgleichheit der beiden Bildfenster sollte die Gütegröße einen Extremwert annehmen. Ein Beispiel für eine Gütegröße ist die Länge des Differenzpfeils 426 in Figur 4, der den Positionsunterschied zwischen einem im ersten Bild 400 platzierten Ursprungsfenster 402 und einem auf Basis des dem Ursprungsfenster 402 zugeordneten, im zweiten Bild 410 platzierten Bildfensters 412 bestimmten Rücksprungfenster 406 misst.

In einem Schritt S708 wird aus dem im zweiten Bild platzierten Teil des Satzes von Bildfenstern anhand des Gütemaßes ein Bildfenster ausgewählt. Dabei sollte die Auswahl auf das Bildfenster fallen, für das das Gütemaß eine höhere Übereinstimmung anzeigt als die jeweiligen Gütemaße aller weiteren Bildfenster des im zweiten Bild platzierten Teils des Satzes von Bildfenstern.

Für das ausgewählte Bildfenster wird in einem Schritt S710 die Bewegung des Bildmerkmals relativ zu dem dem ausgewählten Bildfenster zugeordneten Bildfenster im ersten Bild geschätzt. Dies kann beispielsweise durch Berechnung des optischen Flusses zwischen den genannten Bildfenstern geschehen. Eine Bestimmung des optischen Flusses kann beispielsweise mit dem Horn-Schunck-Verfahren erfolgen, oder auch dem iterativen Lucas-Kanade-Verfahren, dessen Arbeitsprinzip schematisch in Figur 6 veranschaulicht ist.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

**Bezugszeichenliste**

| | |
|---|---|
| 100 | Bildausschnitt |
| 102 | Bildfenster |
| 104 | Bildmerkmal |
| 200 | Bildausschnitt |
| 202 | Bildfenster |

204   Bildmerkmal
300   Satz von Bildfenstern
302   Bildfenster
304   Bezugspixel
400   Bild
402   Ursprungsfenster
404   Bildmerkmal
406   Rücksprungfenster
410   Bild
412   Bildfenster
414   Bildmerkmal
420   Verschiebung
422   Zuordnung
424   Zuordnung
426   Positionsdifferenz
500   Helligkeitsverteilung
502   Helligkeitsverteilung
510   Gradient
512   Helligkeitsdifferenz
514   Verschiebung
520   Gradient
522   Helligkeitsdifferenz
524   Verschiebung
530   Gradient
532   Helligkeitsdifferenz
534   Verschiebung
600   Bildausschnitt
602   Kante
604   Bildmerkmal
610   Eigenvektor
612   Eigenvektor
621   Bildfenster
622   Bildfenster
623   Bildfenster
630   Gerade
700   Verfahren

**Patentansprüche**

1. Computerimplementiertes Verfahren (700) zur Schätzung der Bewegung (420) einer Bildposition eines Bildmerkmals (104; 204; 404; 414; 604) zwischen einem ersten Bild (400) und einem zweiten Bild (410), wobei das Verfahren umfasst:

    - Bestimmen eines Satzes (300) von Bildfenstern (102; 202; 302; 412; 621; 622; 623) im ersten Bild, wobei jedes Bildfenster das Bildmerkmal aufweist, wobei der Satz der Bildfenster ein initiales Bildfenster umfasst, wobei das Verfahren eine Detektion einer Kante (602) in dem initialen Bildfenster umfasst, wobei das Bestimmen der nebst dem initialen Bildfenster im Satz der Bildfenster enthaltenen Bildfenster auf Basis der detektierten Kante erfolgt,
    - Identifikation zumindest eines Teils des Satzes der Bildfenster in dem zweiten Bild,
    - Für den Teil des Satzes der Bildfenster, Bewertung einer Güte einer Zuordnung (422; 424) des jeweiligen Bildfensters im ersten Bild zum jeweiligen Bildfenster im zweiten Bild und Auswahl eines der Bildfenster anhand der Bewertung,
    - Schätzen der Bewegung der Bildposition des Bildmerkmals unter Verwendung des ausgewählten Bildfensters.

2. Verfahren nach Anspruch 1, wobei der Satz der Bildfenster punktsymmetrisch zur Bildposition die Bildposition im ersten Bild umgibt.

3. Verfahren nach einem der vorigen Ansprüche, wobei der Satz der Bildfenster weniger als 10 Bildfenster umfasst, insbesondere 9, 5 oder 3 oder weniger als 3 Bildfenster.

4. Verfahren nach einem der vorigen Ansprüche, wobei die Bildfenster des Satzes der Bildfenster senkrecht zur detektierten Kante hintereinander angeordnet sind.

5. Verfahren nach Anspruch 4, wobei zum Erhalt des Teils des Satzes der Bildfenster das initiale Bildfenster nicht berücksichtigt wird.

6. Verfahren nach einem der vorigen Ansprüche, wobei zum Erhalt des Teils des Satzes der Bildfenster ein zufällig ausgewählter Satz der Bildfenster nicht berücksichtigt wird.

7. Verfahren nach einem der vorigen Ansprüche, wobei die Identifikation des zumindest einen Teils des Satzes der Bildfenster in dem zweiten Bild unter Verwendung einer optischen Fluss-Bestimmungsmethode erfolgt.

8. Verfahren nach Anspruch 7, wobei es sich bei der optischen Fluss-Bestimmungsmethode um die Lucas-Kanade-Methode oder die Horn-Schunck-Methode handelt.

9. Verfahren nach Anspruch 7 oder Anspruch 8, wobei die Detektion der Kante (602) basierend auf dem Strukturtensor der Harris-Methode oder der Lucas-Kanade-Methode erfolgt.

10. Verfahren nach Anspruch 9, wobei das Bestimmen der nebst dem initialen Bildfenster im Satz der Bildfenster enthaltenen Bildfenster auf Basis der detektierten Kante umfasst: Bestimmung einer ersten Richtung basierend auf dem Eigenvektor (610; 612) des Strukturtensors, welcher zum größten Eigenwert korrespondiert, sowie Bestimmung einer zweiten Richtung senkrecht zur ersten Richtung, wobei die nebst dem initialen Bildfenster im Satz der Bildfenster enthaltenen Bildfenster entlang der zweiten Richtung angeordnet sind.

11. Verfahren nach einem der vorigen Ansprüche, wobei die Schätzung der Bewegung auf Basis des Positionsunterschieds des ausgewählten Bildfensters zwischen dem ersten Bild und dem zweiten Bild erfolgt.

12. Verfahren nach Anspruch 11, wobei das Schätzen der Bewegung eine Identifikation des ausgewählten Bildfensters im zweiten Bild umfasst, wobei

   - für jedes Bildfenster des zumindest einen Teils des Satzes der Bildfenster die Identifikation des Bildfensters in dem zweiten Bild iterativ mit einer ersten Anzahl von Iterationsschritten für verschiedene Positionen des jeweiligen Bildfensters in dem zweiten Bild erfolgt, und
   - die Identifikation des ausgewählten Bildfensters im zweiten Bild iterativ mit einer zweiten Anzahl von Iterationsschritten für verschiedene Positionen der ausgewählten Bildfensters in dem zweiten Bild erfolgt,

   wobei die zweite Anzahl größer ist als die erste Anzahl.

13. Verfahren nach Anspruch 12 oder 11, wobei das Schätzen der Bewegung unter Verwendung einer optischen Fluss-Bestimmungsmethode erfolgt.

14. Verfahren nach einem der vorigen Ansprüche, wobei

   - für jedes Bildfenster des zumindest einen Teils des Satzes der Bildfenster die Identifikation des Bildfensters in dem zweiten Bild iterativ bei einer ersten Anzahl verschiedener Bildauflösungen des ersten und zweiten Bildes erfolgt, wobei ausgehend von der niedrigsten Bildauflösung das Resultat der Identifikation des Bildfensters zur Identifikation des Bildfensters bei einer höheren Bildauflösung verwendet wird, und
   - die Identifikation des ausgewählten Bildfensters in dem zweiten Bild iterativ bei einer zweiten Anzahl verschiedener Bildauflösungen des ersten und zweiten Bildes erfolgt, wobei ausgehend von der niedrigsten Bildauflösung das Resultat der Identifikation des ausgewählten Bildfensters zur Identifikation des ausgewählten Bildfensters bei einer höheren Bildauflösung verwendet wird,

   wobei die erste Anzahl kleiner ist als die zweite Anzahl.

15. Verfahren nach einem der vorigen Ansprüche, wobei

- der Teil des Satzes der Bildfenster in dem zweiten Bild erste Bildgrößen aufweist, und
- zur Schätzung der Bewegung der Bildposition des Bildmerkmals das ausgewählte Bildfenster gegenüber der zugehörigen ersten Bildgröße vergrößert wird.

16. Verfahren nach einem der vorigen Ansprüche, wobei bezüglich eines gegebenen Bildfensters des Teils des Satzes der Bildfenster im ersten Bild die Bewertung der Güte ausgewählt ist aus einem der folgenden Kriterien:

- Ausgehend vom identifizierten Bildfenster im zweiten Bild, Identifikation eines hierzu zugehörigen Bildfensters im ersten Bild, wobei die Bewertung der Güte ein Maß für die Deckungsgleichheit des identifizierten hierzu zugehörigen Bildfensters im ersten Bild mit dem gegebenen Bildfenster des Satzes von Bildfenstern im ersten Bild ist, wobei optional die Identifikation des hierzu zugehörigen Bildfensters im ersten Bild unter Verwendung einer optischen Fluss-Bestimmungsmethode erfolgt;
- Bestimmung eines Streumaßes des Bildinhaltes des Bildfensters im ersten Bild in Bezug auf das identifizierte Bildfenster im zweiten Bild, wobei die Bewertung der Güte auf dem Streumaß basiert;
- Bestimmung der Langrangeschen Kosten eines Streumaßes des Bildinhaltes des Bildfensters im ersten Bild in Bezug auf das identifizierte Bildfenster im zweiten Bild und einem weiteren Maß, wobei das weitere Maß auf einer der folgenden Varianten basiert:

i. Dem Gradienten (510; 520; 530) des Bildinhaltes des Bildfensters im ersten Bild oder im zweiten Bild;
ii. Dem Strukturtensor der Harris-Methode oder der Lucas-Kanade-Methode;
iii. Einem Cornerness-Maß des Bildinhaltes des Bildfensters im ersten Bild oder im zweiten Bild.

17. Verfahren nach Anspruch 16, wobei das Streumaß einen mittleren oder absoluten quadratischen Fehler umfasst.

18. Verfahren nach Anspruch 17 oder 16, wobei

- das identifizierte Bildfenster im zweiten Bild gegenüber dem gegebenen Bildfenster im ersten Bild um einen ersten Vektor (422) verschoben ist,
- das hierzu zugehörige Bildfenster im ersten Bild gegenüber dem identifizierten Bildfenster im zweiten Bild um einen zweiten Vektor (424) verschoben ist, und
- die Bewertung der Güte einen Vergleich des ersten und zweiten Vektors berücksichtigt.

19. Computerprogrammprodukt mit von einem Prozessor ausführbaren Instruktionen zur Durchführung des Verfahrens (700) nach einem der vorigen Ansprüche.

20. Vorrichtung zur Schätzung der Bewegung (420) einer Bildposition eines Bildmerkmals (104; 204; 404; 414; 604) zwischen einem ersten Bild (400) und einem zweiten Bild (410), wobei die Vorrichtung einen Prozessor und einen Speicher mit Instruktionen umfasst, wobei die Ausführung der Instruktionen durch den Prozessor die Vorrichtung veranlasst zu:

- Bestimmen eines Satzes (300) von Bildfenstern (102; 202; 302; 412; 621; 622; 623) im ersten Bild, wobei jedes Bildfenster das Bildmerkmal aufweist, wobei der Satz der Bildfenster ein initiales Bildfenster umfasst, wobei das Verfahren eine Detektion einer Kante (602) in dem initialen Bildfenster umfasst, wobei das Bestimmen der nebst dem initialen Bildfenster im Satz der Bildfenster enthaltenen Bildfenster auf Basis der detektierten Kante erfolgt,
- Identifikation zumindest eines Teils des Satzes der Bildfenster in dem zweiten Bild,
- Für den Teil des Satzes der Bildfenster, Bewertung der Güte einer Zuordnung (422; 424) des jeweiligen Bildfensters im ersten Bild zum jeweiligen Bildfenster im zweiten Bild und Auswahl eines der Bildfenster anhand der Bewertung,
- Schätzen der Bewegung der Bildposition des Bildmerkmals unter Verwendung des ausgewählten Bildfensters.

**Claims**

1. A computer-implemented method (700) for estimating the movement (420) of an image position of an image feature (104; 204; 404; 414; 604) between a first image (400) and a second image (410), wherein the method comprises:

- determining a set (300) of image windows (102; 202; 302; 412; 621; 622; 623) in the first image, wherein each image window contains the image feature, wherein the set of image windows comprises an initial image window, wherein the method comprises a detection of an edge (602) in the initial image window, wherein the image window contained in addition to the initial image window in the set of image windows is determined on the basis of the detected edge,
- identifying at least a portion of the set of the image windows in the second image,
- for the portion of the set of image windows, evaluating the quality of a match (422; 424) between the particular image window in the first image and the corresponding image window in the second image, and selecting one of the image windows on the basis of the evaluation, and
- estimating the movement of the image position of the image feature using the selected image window.

2. The method according to claim 1, wherein the set of image windows surrounds the image position in the first image point-symmetrically with respect to the image position.

3. The method according to one of the preceding claims,
wherein the set of image windows comprises fewer than 10 image windows, in particular 9, 5, or 3 or fewer than 3 image windows.

4. The method according to one of the preceding claims,
wherein the image windows of the set of image windows are arranged one behind the other perpendicular to the detected edge.

5. The method according to claim 4, wherein the initial image window is not taken into account in obtaining the portion of the set of image windows.

6. The method according to one of the preceding claims,
wherein a randomly selected set of image windows is not taken into account in obtaining the portion of the set of image windows.

7. The method according to any one of the preceding claims,
wherein the at least one portion of the set of image windows in the second image is identified using an optical flow determination method.

8. The method according to claim 7, wherein the optical flow determination method is the Lucas-Kanade method or the Horn-Schunck method.

9. The method according to claim 7 or claim 8, wherein the detection of the edge (602) is based on the structure tensor of the Harris method or the Lucas-Kanade method.

10. The method according to claim 9, wherein the determination of the image windows contained in addition to the initial image window in the set of image windows on the basis of the detected edge comprises: determining a first direction based on the eigenvector (610; 612) of the structure tensor which corresponds to the greatest eigenvalue, and determining a second direction perpendicular to the first direction, wherein the image windows contained in the set of image windows in addition to the initial image window are arranged along the second direction.

11. The method according to one of the preceding claims,
wherein the movement is estimated on the basis of the difference in position of the selected image window between the first image and the second image.

12. The method according to claim 11, wherein the estimation of the movement comprises an identification of the selected image window in the second image, wherein

- for each image window of the at least one portion of the set of image windows, the image window in the second image takes place is identified iteratively, with a first number of iteration steps for different positions of the particular image window in the second image, and
- the selected image window in the second image is identified iteratively with a second number of iteration steps for different positions of the selected image window in the second image,

wherein the second number is greater than the first number.

**13.** The method according to claim 12 or 11, wherein the movement is estimated using an optical flow determination method.

**14.** The method according to one of the preceding claims, wherein

- for each image window of the at least one portion of the set of image windows, the image window in the second image takes place is identified iteratively, with a first number of different image resolutions of the first and second images, wherein, starting from the lowest image resolution, the result of the identification of the image window is used for identifying the image window with a higher image resolution, and
- the selected image window in the second image is identified iteratively, with a second number of different image resolutions of the first and second images, wherein, starting from the lowest image resolution, the result of the identification of the selected image window is used to identify the selected image window at a higher image resolution,

wherein the first number is less than the second number.

**15.** The method according to one of the preceding claims, wherein

- the portion of the set of image windows in the second image has first image sizes, and
- to estimate the movement of the image position of the image feature, the selected image window is enlarged compared to the associated first image size.

**16.** The method according to one of the preceding claims, wherein, with respect to a given image window of the portion of the set of image windows in the first image, the evaluation of the quality is selected from one of the following criteria:

- starting from the identified image window in the second image, identification of an associated image window in the first image, wherein the evaluation of the quality is a measure of the congruence of the identified associated image window in the first image with the given image window of the set of image windows in the first image, wherein the associated image window in the first image is optionally identified using an optical flow determination method;
- determination of a degree of scattering of the image content of the image window in the first image with respect to the identified image window in the second image, wherein the evaluation of the quality is based on the degree of scattering;
- determination of the Lagrangian costs of a degree of scatter of the image content of the image window in the first image with respect to the identified image window in the second image, and determination of a further measure, wherein the further measure is based on one of the following variants:

  i. the gradient (510; 520; 530) of the image content of the image window in the first image or in the second image;
  ii. the structure tensor of the Harris method or the Lucas-Kanade method;
  iii. a cornerness measure of the image content of the image window in the first image or in the second image.

**17.** The method according to claim 16, wherein the degree of scattering comprises a mean or absolute square error.

**18.** The method according to claim 17 or 16, wherein

- the identified image window in the second image is displaced by a first vector (422) compared to the given image window in the first image,
- the associated image window in the first image is displaced by a second vector (424) compared to the identified image window in the second image, and
- the evaluation of the quality takes into account a comparison of the first and second vector.

**19.** A computer program product having instructions that can be executed by a processor for carrying out the method (700) according to one of the preceding claims.

**20.** A device for estimating the movement (420) of an image position of an image feature (104; 204; 404; 414; 604) between a first image (400) and a second image (410), wherein the device comprises a processor and a memory with instructions, wherein the execution of the instructions by the processor results in the device:

- determining a set (300) of image windows (102; 202; 302; 412; 621; 622; 623) in the first image, wherein each image window contains the image feature, wherein the set of image windows comprises an initial image window, wherein the method comprises a detection of an edge (602) in the initial image window, wherein the image window contained in addition to the initial image window in the set of image windows is determined on the basis of the detected edge,
- identifying at least a portion of the set of the image windows in the second image,
- for the portion of the set of image windows, evaluating the quality of a match (422; 424) between the particular image window in the first image and the corresponding image window in the second image, and selecting one of the image windows on the basis of the evaluation, and
- estimating the movement of the image position of the image feature using the selected image window.

**Revendications**

1. Procédé mis en œuvre par ordinateur (700) pour l'estimation du déplacement (420) d'une position d'image d'une caractéristique d'image (104 ; 204 ; 404 ; 414 ; 604) entre une première image (400) et une deuxième image (410), le procédé comprenant :

- la détermination d'un ensemble (300) de fenêtres d'image (102 ; 202 ; 302 ; 412 ; 621 ; 622 ; 623) dans la première image, où chaque fenêtre d'image présente la caractéristique d'image, où l'ensemble des fenêtres d'image comprend une fenêtre d'image initiale, où le procédé comprend une détection d'un bord (602) dans la fenêtre d'image initiale, où la détermination de la fenêtre d'image contenue dans l'ensemble de fenêtres d'image, en plus de la fenêtre d'image initiale, a lieu sur la base du bord détecté,
- l'identification d'au moins une partie de l'ensemble des fenêtres d'image dans la deuxième image,
- pour la partie de l'ensemble des fenêtres d'image, l'évaluation de la qualité d'une association (422 ; 424) de la fenêtre d'image en question dans la première image avec la fenêtre d'image respective dans la deuxième image et la sélection d'une des fenêtres d'image à l'aide de l'évaluation,
- l'estimation du déplacement de la position d'image de la caractéristique d'image moyennant l'emploi de la fenêtre d'image sélectionnée.

2. Procédé selon la revendication 1, dans lequel l'ensemble des fenêtres d'image entoure la position d'image dans la première image par symétrie ponctuelle par rapport à la position d'image.

3. Procédé selon l'une des revendications précédentes, dans lequel l'ensemble des fenêtres d'image comprend moins de 10 fenêtres d'image, en particulier, 9, 5 ou 3 ou moins de 3 fenêtres d'image.

4. Procédé selon l'une des revendications précédentes, dans lequel les fenêtres d'image de l'ensemble des fenêtres d'image sont disposées verticalement les unes derrière les autres par rapport au bord détecté.

5. Procédé selon la revendication 4, dans lequel, pour l'obtention de la partie de l'ensemble des fenêtres d'image, on ne tient pas compte de la fenêtre d'image initiale.

6. Procédé selon l'une des revendications précédentes, dans lequel, pour l'obtention de la partie de l'ensemble des fenêtres d'image, on ne tient pas compte d'un ensemble des fenêtres d'image choisi aléatoirement.

7. Procédé selon l'une des revendications précédentes, dans lequel l'identification de l'au moins une partie de l'ensemble des fenêtres d'image dans la deuxième image a lieu moyennant l'emploi d'une méthode de détermination de flux optique.

8. Procédé selon la revendication 7, dans lequel, dans le cas de la méthode de détermination du flux optique, il s'agit de la méthode de Lucas-Kanade ou de la méthode de Horn-Schunck.

9. Procédé selon la revendication 7 ou la revendication 8, dans lequel la détection du bord (602) a lieu en se basant sur le tenseur de structure de la méthode de Harris ou de la méthode Lucas-Kanade.

**10.** Procédé selon la revendication 9, dans lequel la détermination de la fenêtre d'image contenue dans l'ensemble des fenêtres d'image en plus de la fenêtre d'image initiale sur la base du bord détecté comprend : la détermination d'une première direction se basant sur le vecteur propre (610 ; 612) du tenseur de structure, lequel correspond à la plus grande valeur propre, ainsi que la détermination d'une deuxième direction perpendiculaire à la première direction, où les fenêtres d'images contenues dans l'ensemble des fenêtres d'image en plus de la fenêtre d'image initiale sont disposées le long de la deuxième direction.

**11.** Procédé selon l'une des revendications précédentes, dans lequel l'estimation du déplacement sur la base de la différence de position de la fenêtre d'image sélectionnée a lieu entre la première image et la deuxième image.

**12.** Procédé selon la revendication 11, dans lequel l'estimation du déplacement comprend une identification de la fenêtre d'image sélectionnée dans la deuxième image, où

- pour chaque fenêtre d'image de l'au moins une partie de l'ensemble des fenêtres d'image, l'identification de la fenêtre d'image dans la deuxième image a lieu de manière itérative avec un premier nombre d'étapes d'itérations pour diverses positions de la fenêtre d'image respective dans la deuxième image, et
- l'identification de la fenêtre d'image sélectionnée dans la deuxième image a lieu de manière itérative avec un deuxième nombre d'étapes d'itérations pour diverses positions de la fenêtre d'image sélectionnée dans la deuxième image,

dans lequel le deuxième nombre est supérieur au premier nombre.

**13.** Procédé selon la revendication 12 ou la revendication 11, dans lequel l'estimation du déplacement moyennant l'emploi d'une méthode de détermination de flux optique.

**14.** Procédé selon l'une des revendications précédentes, dans lequel

- pour chaque fenêtre d'image de l'au moins une partie de l'ensemble des fenêtres d'image, l'identification de la fenêtre d'image dans la deuxième image a lieu de manière itérative pour un premier nombre de résolutions d'image différentes des première et deuxième images, où, en partant de la résolution d'image la plus faible, le résultat de l'identification de la fenêtre d'image est employé pour l'identification de la fenêtre d'image pour une résolution d'image plus importante, et
- l'identification de la fenêtre d'image sélectionnée dans la deuxième image a lieu de manière itérative pour un deuxième nombre de résolutions d'image différentes des première et deuxième images, où, en partant de la résolution d'image la plus faible, le résultat de l'identification de la fenêtre d'image sélectionnée est employé pour l'identification de la fenêtre d'image sélectionnée pour une résolution d'image plus élevée,

dans lequel le premier nombre est inférieur au deuxième nombre.

**15.** Procédé selon l'une des revendications précédentes, dans lequel

- la partie de l'ensemble des fenêtres d'image dans la deuxième image présente des premières tailles d'image, et
- pour l'estimation du déplacement de la position d'image de la caractéristique d'image, la fenêtre d'image sélectionnée est agrandie par rapport à la première taille d'image correspondante.

**16.** Procédé selon l'une des revendications précédentes, dans lequel la détermination de la qualité est sélectionnée par rapport à une fenêtre d'image donnée de la partie de l'ensemble des fenêtres d'image dans la première image à partir de l'un des critères suivants :

- en partant de fenêtres d'image identifiées dans la deuxième image, l'identification d'une fenêtre d'image qui lui est associée dans la première image, où l'évaluation de la qualité est une mesure pour la congruence de la fenêtre d'image correspondante à celle-ci dans la première image avec la fenêtre d'image donnée de l'ensemble de fenêtres d'image dans la première image, où, éventuellement, l'identification de la fenêtre d'image lui étant associée dans la première image a lieu moyennant l'emploi d'une méthode de détermination de flux optique ;
- la détermination d'une mesure de la dispersion du contenu d'image de la fenêtre d'image dans la première image en ce qui concerne la fenêtre d'image identifié dans la deuxième image, où l'évaluation de la qualité se base sur la mesure de la dispersion ;
- la détermination des coûts à long terme d'une mesure de la dispersion du contenu d'image de la fenêtre d'image dans la première image en ce qui concerne la fenêtre d'image identifiée dans la deuxième image et d'une nouvelle mesure, où la nouvelle mesure se base sur l'une des variantes suivantes :

    i. le gradient (510 ; 520 ; 530) du contenu d'image de la fenêtre d'image dans la première image ou dans la deuxième image ;
    ii. le tenseur de structure de la méthode de Harris ou de la méthode de Lucas-Kanade ;
    iii. une mesure de cornéarité du contenu d'image de la fenêtre d'image dans la première image ou dans la deuxième image.

**17.** Procédé selon la revendication 16, dans lequel la mesure de la dispersion comprend une erreur quadratique moyenne ou absolue.

**18.** Procédé selon la revendication 17 ou la revendication 16, dans lequel

    - la fenêtre d'image identifiée dans la deuxième image est décalée d'un premier vecteur (422) par rapport à la fenêtre d'image donnée dans la première image,
    - la fenêtre d'image qui lui est associée dans la première image est décalée d'un deuxième vecteur (424) par rapport à la fenêtre d'image identifiée dans la deuxième image, et
    - l'évaluation de la qualité tient compte d'une comparaison des premier et deuxième vecteurs.

**19.** Produit-programme informatique avec des instructions exécutables par un processeur pour l'exécution du procédé (700) selon l'une des revendications précédentes.

**20.** Dispositif permettant l'estimation du déplacement (420) d'une position d'image d'une caractéristique d'image (104 ; 204 ; 404 ; 414 ; 604) entre une première image (400) et une deuxième image (410), où le dispositif comprend un processeur et une mémoire avec des instructions, où l'exécution des instructions par le processeur fait en sorte que le dispositif effectue :

    - la détermination d'un ensemble (300) de fenêtres d'image (102 ; 202 ; 302 ; 412 ; 621 ; 622 ; 623) dans la première image, où chaque fenêtre d'image présente la caractéristique d'image, où l'ensemble des fenêtres d'image comprend une fenêtre d'image initiale, où le procédé comprend une détection d'un bord (602) dans la fenêtre d'image initiale, où la détermination de la fenêtre d'image contenue dans l'ensemble des fenêtres d'image en plus de la fenêtre d'image initiale a lieu sur la base du bord détecté,
    - l'identification d'au moins une partie de l'ensemble des fenêtres d'image dans la deuxième image,
    - pour la partie de l'ensemble des fenêtres d'image, l'évaluation de la qualité d'une association (422 ; 424) de la fenêtre d'image respective dans la première image à la fenêtre d'image respective dans la deuxième image et la sélection d'une des fenêtres d'image à l'aide de l'évaluation,
    - l'estimation du déplacement de la position d'image de la caractéristique d'image moyennant l'emploi de la fenêtre d'image sélectionnée.

**Fig. 1**

**Fig. 2**

**Fig. 3**

**Fig. 4**

**Fig. 5**

EP 3 931 798 B1

Fig. 6A

Fig. 6B

Fig. 6C

Fig. 6D 0°

Fig. 6E 135°

Fig. 6F 90°

Fig. 6G 45°

Fig. 6H

700

Bildfenster im ersten Bild bestimmen — S702

Bildfenster im zweiten Bild identifizieren — S704

Zuordnungsgüten bestimmen — S706

Bildfenster auswählen — S708

Bewegung des Bildmerkmals schätzen — S710

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017104957 A1